# EUROPEAN PATENT APPLICATION

(11) **EP 3 991 608 A1**
(43) Date of publication of application: **04.05.2022**
(21) Application number: 20204152.1
(22) Date of filing: 27.10.2020
(51) Int. Cl.: A47C 27/00, B09B 3/00, B29B 17/02

(54) **A METHOD FOR DIVIDING INTO PARTS A MATTRESS FOR RECYCLING PURPOSES AND A MACHINE FOR DIVIDING INTO PARTS A MATTRESS**

(71) Applicant: Matras Recycling EU B.V., 3565 BD Utrecht (NL)
(72) Inventor: KORTINK, Rudolf Johannes Antonius, 3723 KE Bilthoven (NL)
(74) Representative: Plaggenborg, Menko Bernard

(57) **Abstract**

The invention relates to a method for dividing into parts a mattress, the mattress comprising: - a top cover, - a bottom cover, - side walls connecting the top cover and the bottom cover, and - interior parts, and is characterized in that it comprises the use of a fluid jet cutter and comprises the steps of cutting: [a] the mattress in at least one of the top cover and bottom cover near the side walls; or [b] the mattress in at least one side wall near the top cover and bottom cover for disconnecting at least part of one side wall of the mattress from at least one of the top cover and the bottom cover; or [c] interior parts for disconnecting mutually connected or coupled components.

## Description

The present invention relates to a method for dividing into parts a mattress for recycling purposes according to the preamble of claim 1 and to a machine for dividing into parts a mattress.

It is known in the art to recycle a mattress to recover at least part of the components the mattress is constituted of. Up to date, mattresses are cut by hand or shredded. When cutting same by hand, it is possible to recover part of the components it is made of. However, that requires a lot of manual work as well as a lot of time end effort. By shredding the mattress it is virtually impossible to recover the individual components the mattress is constituted of. Only incineration or landfill is possible, wherein incineration allows to recover contaminated metals after the incineration process has finished in case of a mattress with metal springs, like pocket springs, also identified as coils or pocket coils.

Such known method thus provides disadvantages. There is no solution that allows for a more complete recovery of the individual components a mattress is made of.

The invention aims at providing an improved method for recovering individual components of a mattress as mentioned in the preamble.

The invention further aims at providing a method that allows for an at least partial division into parts of a mattress so as to allow a further processing of the several obtained parts of the mattress.

So as to obtain at least one of the above mentioned aims, the invention provides a method as mentioned in claim 1. This method has the advantage that an easy method is obtained for dividing into parts a mattress. No manual intervention is required, saving labour costs.

It has also shown that the method according to the present invention has the advantage that no contamination with environmentally unfriendly substances whatsoever is obtained. Also, the method is extremely fast. Such synergistic effect is an important and advantageous feature.

The invention therefore relates to a method for dividing into parts a mattress, the mattress comprising: - a top cover, - a bottom cover, - side walls connecting the top cover and the bottom cover, and - interior parts, the method being characterized in that it comprises the use of a fluid jet cutter and cutting: [a] the mattress in at least one of the top cover and bottom cover near the side walls; or [b] the mattress in at least one side wall near the top cover and bottom cover for disconnecting at least part of one side wall of the mattress from at least one of the top cover and the bottom cover; or [c] interior parts for disconnecting mutually connected or coupled components. This method provides the advantage that a fast and simple cutting of the mattress is obtained. By removing the side walls from the core of the mattress, a first part, the side wall, is obtained that is difficult to separate and that comprises a lot of different materials, whereas a second part is obtained, the core, comprising a lot of different materials that are easy to separate and to recover. As a result, the present invention provides a method that allows to recover all recoverable materials from a mattress easy, fast and at low costs. An additional advantage is that the present method yields a clean product.

It is preferred that the fluid jet cutter is chosen from a water jet cutter and a gas jet cutter. These are cheap tools that are easy to integrate in a recycling station.

A preferred method comprises the step of guiding the mattress along the fluid jet cutter and performing at least one of steps [a], [b] and [c]. By transporting the mattress and allowing the fluid jet cutter to perform the cutting, no manual interaction of the mattress is required. In such method, it is especially preferred that a robot performs the fluid jet cutting action.

The method preferably comprises the step of cutting the mattress in at least one of the top cover and bottom cover near the side walls, for disconnecting the side walls of the mattress from the top cover and the bottom cover. This allows for a fast and easy separation of the side walls from the core of the mattress.

Optionally, the method may comprise the step of cutting the mattress in at least one side wall near the top cover and bottom cover for disconnecting part of the side wall of the mattress from the top cover and the bottom cover. This allows for separating the side walls from the core, whereas a rim remains connected to the top cover and the bottom cover.

In addition, the method according to the invention may comprise the step of cutting interior parts. This allows for a recovering of material parts from the inside of the core of the mattress.

In this description, the core of the mattress comprises all parts of a mattress that are positioned in between the side walls of the mattress, i.e. including the top cover and the bottom cover and all interior parts positioned in between the top cover and the bottom cover. The top cover is the main plane a person rests upon, whereas the bottom cover that rests on a bed base and that usually is a mesh base or a slatted base.

When cutting interior parts, the method preferably comprises the step of cutting a pocket of a pocket spring so as to be able to release the spring from the pocket.

In the method according to the invention, it is preferred that after cutting the pocket, a step is performed removing the spring from the pocket. The metal spring is then removed from the remaining, usually plastic parts, comprising several polymer types, and natural based materials, usually wool and cotton and sometimes silk.

It is especially preferred that the pocket is cut at a longitudinal end face thereof. This allows for a longitudinal removal of the spring from the pocket. The longitudinal direction is the direction in which the spring is compressed and extended.

An optimal cutting is obtained when the step of cutting the pockets applies a plurality of fluid jets for making a plurality of cuts in the pocket. As a result, the end face of the pocket is opened sufficiently for removing the spring from the pocket. In addition, by cutting the end face, the fluid jet cutter can be positioned above the mattress and be directed downwards such that no fluids are spilled to the sides of the mattress.

The method according to the invention preferably comprises a first step of guiding the mattress along a first fluid jet cutter and performing at least one of the steps [a] and [b] and comprises a second step of consecutively guiding the mattress along a second fluid jet cutter and performing the step [c]. This allows for a fast method for releasing and removing the top cover from the mattress and subsequently and consecutively releasing and removing the interior parts, for example springs.

The invention therefore also relates to the step of removing springs from the cut pockets.

Removal of the springs may be obtained in a variety of ways. For example, the method may comprise applying a magnet, clamping device or a hook for removing the springs from the cut pockets.

As a matter of fact, if the mattress comprises a resilient core made from a natural or artifical rubber or another polymer no pockets need to be cut.

In such case, the method according the present invention preferably comprises the step of cutting abutting material parts of different origin of the interior parts at their mutual interfaces.

The invention also relates to a method comprising the step of applying a sensor, for example for controlling an actuator for positioning the mattress in a required position on the conveyor, or for cutting the mattress at a required position. A machine applying the method could comprise a sensor for determining the position of the mattress or for distinguishing different material parts of the mattress from each other, for example for controlling the water jet cutters. Such sensor controlled water jet cutter can easily cut different material parts at their intersections, allowing for an accurate recovery of different materials, like natural rubber and polyurethane and polyether, et cetera. The method thus also enables the use of positioning devices for automatically positioning any mattress that is placed on the conveyor in a required position, for example lengthwise or widthwise. Such positioning device also preferably applies a sensor controlled actuator.

Hereafter, the invention will be further described by means of an example. For ease of reference and simplicity of the drawing, not all parts that are required for a practical embodiment are shown in the drawing. The same or identical parts are denoted by same reference numerals.

The drawing shows in:
Fig. 1 a schematic and simplified side view of a device for performing the method according to the invention,
Fig. 2 a top view of the device according to Fig. 1,
Fig. 3 and Fig. 4 a cutting scheme of pockets,
Fig. 5 and Fig. 6 a top view and a side view, respectively, of a magnetic separator.

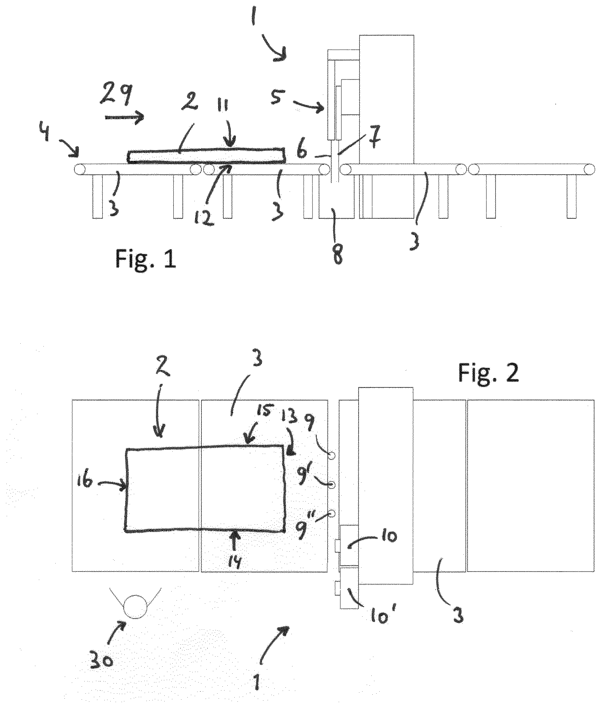

The method according to the invention can be implemented in a device as shown in de drawing. The drawing comprises six figures. Fig. 1 shows a schematic side view of a device 1 for handling mattresses. A single mattress 2 is shown on a conveyor 3. The positioning of the mattress may be lengthwise, as shown in these drawings, or widthwise. The advantage of a widthwise positioning is that more mattresses can be positioned on the conveyor allowing for a higher throughput if the same conveyor speed is applied. The conveyor 3 transports the mattress 2 in direction of arrow 29 from a starting position 4 towards a water jet cutter 5. Two sets of water jets 6, 7 are shown and are directed downwards towards a container 8. The mattress 2 is transported substantially continuously through the water jet cutter 5 such that parts thereof are cut by the water jets 6, 7. As a result, the mattress 2 is separated into parts (not shown).

Fig. 2 shows a schematic top view of the device 1 of Fig. 1. As shown in Fig. 2, the first set of water jets 6 comprises three nozzles 9, 9', 9". The second set of jets 7 comprises two nozzles, wherein the housings 10, 10' of each nozzle is visible in Fig. 2.

The nozzles 9, 9', 9"; 10, 10' of each set 6, 7 are at least movable in a plane perpendicular to the transport direction of the mattress 2 and optionally also in the transport direction of the mattress 2. The mattress 2 comprises a top cover 11, a bottom cover 12, a front side wall 13, longitudinal opposite side walls 14, 15 and a tail side wall 16. For example, nozzles 10, 10' of the second set 7 may be embodied for cutting the mattress 2 through the top cover 11 near the side walls so as to separate the side walls 13, 14, 15, 16 from the core of the mattress, the core substantially comprising the top cover 11 and the bottom cover 12 and all parts contained there between.

Other set-ups of water jets than the one shown in the drawings may be used. For example, two water jets may be used for cutting the mattress for removing the side walls, whereas two or more than two or three, or even more than four or even more than five, for example more than six or more than seven, even more than eight or more than nine water jets, like ten water jets, may be used for cutting the pockets or for cutting inner parts that are comprised of different materials at their intersections.

After separating the side walls 13, 14, 15, 16, the top cover 11 may be removed, exposing the inner resilient parts of the mattress 2. These inner resilient parts may be a resilient core made from a material of different origin, like natural or artificial rubber or another polymer. In such case, the water jets of the device 1 will cut these abutting material parts of different origin at their mutual interfaces, enabling a user 30 to easily separate these different materials, enabling and enhancing recycling.

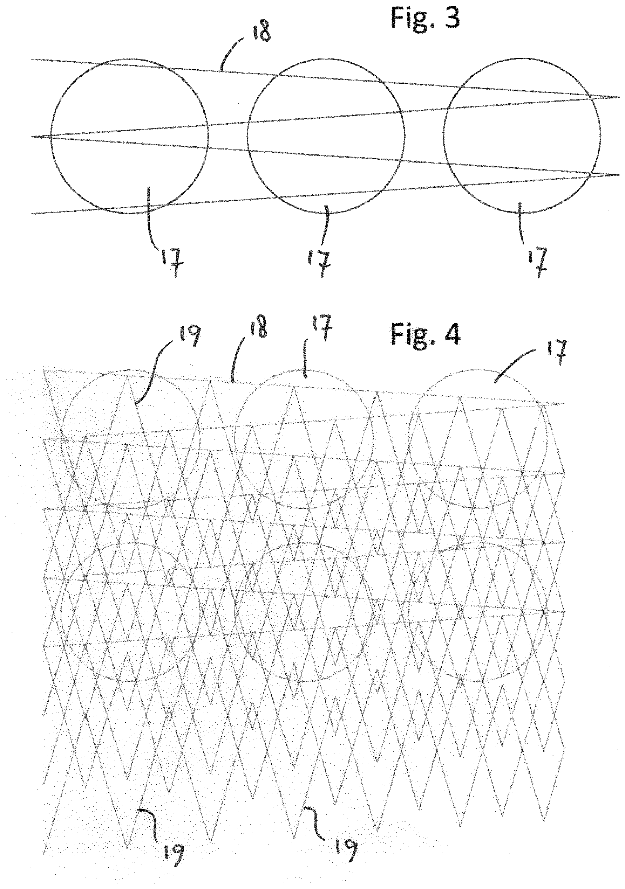

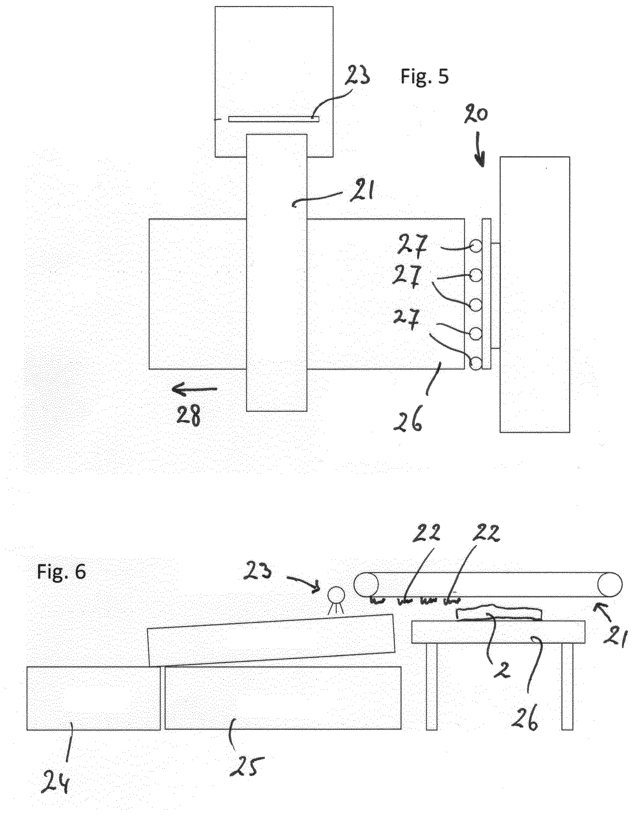

If the inner core comprises pocket springs in pockets 17, the water jets 27 of a water jet cutter 20, as shown in Fig. 5 in a schematic top view, may be embodied for cutting the pockets 17 so as to release the springs therefrom. The water jets 6 and / or 7 may be controlled so as to perform a path for cutting the pockets 17 at multiple cutting patterns 18, 19. Fig. 3 and Fig. 4 show such patterns 18, 19.

The device 20 of Fig. 5 also shows a magnetic separator 21 for removing the springs 22 from the pockets 17, as shown in Fig. 6. The mattress 2 is transported in the direction of arrow 28 on a further conveyor 26.

Since not only the metal springs 22 are removed from the mattress 2 but some textile and plastic material will be removed as well by the magnetic separator 21, a washer 23 is provided for separating the metal springs 22 from said textile and other non-metallic material. Metal is collected in a collector 24 whereas non-metallic material is collected in a rest container 25.

The method may comprise the use of a machine comprising a sensor for determining the position of the mattress or for distinguishing different material parts of the mattress from each other, for example for controlling the water jet cutters. Such sensor controlled water jet cutter can easily cut different material parts at their intersections, allowing for an accurate recovery of different materials, like natural rubber and polyurethane and polyether, et cetera. The method may also enables the use of positioning devices for automatically positioning any mattress that is placed on the conveyor in a required position, for example lengthwise or widthwise. Such positioning device also preferably applies a sensor controlled actuator.

The invention is not limited to the embodiments as mentioned above. The invention also relates to all combinations of features described here independently of each other.

The invention is limited by the claims only.

## Claims

1. A method for dividing into parts a mattress, the mattress comprising: - a top cover, - a bottom cover, - side walls connecting the top cover and the bottom cover, and - interior parts, **characterized in that** the method comprises the use of a fluid jet cutter and cutting: [a] the mattress in at least one of the top cover and bottom cover near the side walls; or [b] the mattress in at least one side wall near the top cover and bottom cover for disconnecting at least part of one side wall of the mattress from at least one of the top cover and the bottom cover; or [c] interior parts for disconnecting mutually connected or coupled components.

2. A method according to claim 1, comprising the step of applying a water jet cutter or an gas jet cutter as fluid jet cutter.

3. A method according to claim 1 or 2, comprising the step of guiding the mattress along the fluid jet cutter and performing at least one of steps [a], [b] and [c].

4. A method according to claim 1, 2 or 3, comprising the step of cutting the mattress in at least one of the top cover and bottom cover near the side walls, for disconnecting the side walls of the mattress from the top cover and the bottom cover.

5. A method according to claim 1, 2 or 3, comprising the step of cutting the mattress in at least one side wall near the top cover and bottom cover for disconnecting part of the side wall of the mattress from the top cover and the bottom cover.

6. A method according to claim 1, 2 or 3, comprising the step of cutting interior parts.

7. A method according to claim 6, comprising the step of cutting a pocket of a pocket spring so as to be able to release the spring from the pocket.

8. A method according to claim 7, comprising the step of removing the spring from the pocket.

9. A method according to any of claims 7 and 8, comprising the step of cutting the pocket at a longitudinal end face thereof.

10. A method according to any of claims 6 to 9, comprising the step of applying a plurality of fluid jets for making a plurality of cuts in the pocket.

11. A method according to any of the preceding claims, comprising a first step of guiding the mattress along a first fluid jet cutter and performing at least one of the steps [a] and [b] and performing a second step of consecutively guiding the mattress along a second fluid jet cutter and performing the step [c].

12. A method according to any of the preceding claims, comprising a further step of removing springs from the cut pockets.

13. A method according to claim 12, comprising applying a magnet, clamping device or a hook for removing the springs from the cut pockets.

14. A method according to claim 1, comprising the step of cutting abutting material parts of different origin of the interior parts at their mutual interfaces.

15. A method according to claim 1, comprising the step of applying a sensor, for example for controlling an actuator for positioning the mattress in a required position on the conveyor, or for cutting the mattress at a required position.
